# FASCICULE DE BREVET EUROPEEN

(11) **EP 0 899 487 B1**
(45) Date de publication et mention de la délivrance du brevet: **29.05.2002**
(21) Numéro de dépôt: 98402001.6
(22) Date de dépôt: 06.08.1998
(51) Int. Cl.: F16H 63/38, F16H 63/34

(54) **Commande interne de boîte de vitesses avec dispositif de maintien d'éléments en plusieurs positions**
Innersteuereinrichtung für ein Schaltgetriebe mit System zum Halten von Verstellpositionen mit Stellelementen
Internal control device for a gearbox with system for maintaining control elements in several positions

(30) Priorité: 29.08.1997 FR 9710782
(43) Date de publication de la demande: 03.03.1999
(73) Titulaire: AUTOMOBILES PEUGEOT, 75116 Paris (FR); AUTOMOBILES CITROEN, 92200 Neuilly-sur-Seine (FR)
(72) Inventeur: Fouillet, Serge, 70400 Hericourt (FR)
(74) Mandataire: Gendraud, Pierre

(56) Documents cités:
- DE-C- 353 246
- US-A- 3 367 205
- US-A- 4 539 859
- US-A- 4 648 283

## Description

L'invention est relative à une commande interne de boîte de vitesses avec dispositif de maintien d'éléments en plusieurs positions.

Elle concerne plus précisément les commandes de vitesses dans lesquelles, pour déplacer alternativement plusieurs éléments juxtaposés d'engagement de rapports, un axe de commande porte au moins un doigt transversal et une pièce dite clé d'interverrouillage, le doigt étant fixé à l'axe et propre à être d'abord engagé sélectivement, par coulissement de l'axe, dans l'une de plusieurs encoches agencées chacune dans l'un desdits éléments, puis à entraîner par rotation de l'axe l'élément ainsi sélectionné, de manière à réaliser l'engagement -ou passage- d'un rapport, tandis que la clé d'interverrouillage est solidaire axialement de l'axe, immobile en rotation et propre à être engagée, par coulissement de l'axe, dans les autres encoches que celle de l'élément sélectionné, de manière à immobiliser les autres éléments d'engagement.

Ces commandes comprennent des moyens de maintien des susdits éléments en plusieurs positions d'utilisation correspondant respectivement au point mort de la boîte de vitesses et à l'engagement de l'un ou l'autre de plusieurs rapports.

Ces moyens, généralement constitués d'une bille ou d'une roulette poussée par un ressort contre une face dite rampe munie de crans appropriés, sont de préférence disposés, dans la tringlerie de commande reliant les susdits éléments à un levier de manoeuvre extérieur, au niveau du doigt donc plutôt "en amont" dans la commande interne, ce qui évite que d'éventuels jeux de fonctionnement entre le doigt et lesdits éléments, et entre ceux-ci et d'autres organes de la commande situés "en aval", soient ressentis désagréablement par l'utilisateur au niveau du levier de manoeuvre.

Toutefois les dispositifs connus comprenant de tels moyens de maintien à rampe et ressort, parfois désignés "billages", présentent l'inconvénient que la poussée du ressort provoqué des efforts parasites dans les pièces mobiles avoisinantes, générateurs de frottements et par suite de dureté et d'imprécision dans la commande, ainsi que d'usure de ces pièces.

Le brevet US 4 539 859 décrit ainsi une commande interne de boite de vitesses manuelle dans laquelle l'axe de commande porte un doigt transversal comprenant des rampes à l'une de ses extrémités et une clé d'interverrouillage comprenant deux bras radiaux identiques entre lesquels l'autre extrémité du doigt est mobile et, dans laquelle le billage de maintien est monté dans un logement rapporté par vissage sur le carter de boite de sorte que la bille vienne en appui contre les rampes du doigt.

L'invention vise à éviter ces inconvénients en proposant une commande interne de boîte de vitesses comportant des moyens de maintien par billage qui soient disposés en amont et qui ne provoquent pas d'efforts parasites générateurs de frottements.

A cet effet, la commande proposée est du type susmentionné, avec un dispositif de maintien à bille ou roulette portée par le doigt et poussée parallèlement à l'axe contre une rampe portée par la clé d'interverrouillage ; selon l'invention, cette clé comporte deux bras radiaux entre lesquels le doigt est mobile en rotation, et le dispositif de maintien comporte deux billes ou roulettes portées par le doigt et poussées en sens inverses respectivement contre deux rampes en vis-à-vis portées chacune par l'un des deux bras.

Selon quelques dispositions intéressantes de l'invention :
- les deux billes ou roulettes sont poussées par un même ressort interposé entre elles ;
- le dispositif de maintien comportant deux billes, celles-ci et le ressort sont logés dans une pièce tubulaire solidaire du doigt ;
- un coussinet d'appui est interposé entre le ressort et chaque bille ;
- les rampes sont formées chacune sur une pièce en matériau dur rapportée sur le bras associé.

Un mode de réalisation d'une commande selon la présente invention est décrit ci-après, avec référence aux dessins annexés parmi lesquels :
- la figure 1 est une vue en coupe axiale partielle d'une partie de boîte de vitesses comportant le dispositif de maintien de la commande ;
- la figure 2 est une vue à plus grande échelle, en coupe axiale, du dispositif de maintien.

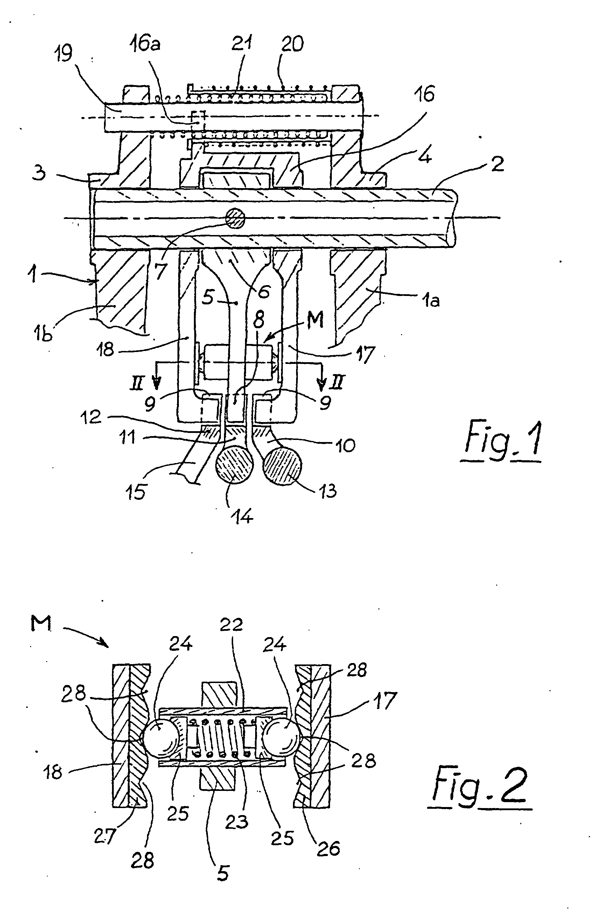

On voit sur la figure 1, dans un carter 1 d'une boîte de vitesses, un axe de commande 2 propre à coulisser et à tourner, sous l'action d'un levier de manoeuvre extérieur non représenté, dans deux paliers 3 et 4 agencés dans des parois parallèles la et 1b du carter.

Un doigt 5 solidaire d'un moyeu 6 fixé à l'axe 2 par une goupille 7 s'étend radialement de sorte que son extrémité libre 8 soit située au niveau d'encoches 9 pratiquées respectivement dans plusieurs éléments 10,11,12 mobiles orthogonalement à l'axe 2.

Ces éléments 10,11,12 font partie chacun d'une tige coulissante 13,14 ou d'un levier pivotant 15 d'actionnement d'au moins une fourchette propre à déplacer un pignon ou un crabot pour réaliser l'engagement ou le dégagement de l'un des rapports de la boîte de vitesses.

Ils permettent ainsi par exemple de passer respectivement des rapports de 1ère ou 2ème, 3ème ou 4ème, 5ème ou marche arrière selon qu'ils sont déplacés dans un sens ou dans l'autre, perpendiculairement au plan de la figure 1.

L'axe de commande 2 porte aussi une clé d'interverrouillage 16 munie de deux bras radiaux 17 et 18 dont l'extrémité libre est située au niveau des encoches 9. Cette clé 16, traversée de façon libre en rotation par l'axe 2, est rendue solidaire axialement de celui-ci par chevauchement du moyeu 6, et elle est immobilisée en rotation par coopération d'une extension 16a qu'elle comporte avec une tige fixe 19 de guidage de ressorts 20 et 21 de rappel en position axiale centrale représentée.

Les extrémités respectives du doigt 5 et des bras 17 et 18 de la clé 16 sont disposées, par rapport aux éléments mobiles 10,11,12 de façon connue telle que, par coulissement de l'axe 2, le doigt 5 est propre à être d'abord sélectivement engagé dans l'une des encoches 9 puis à entraîner l'élément (par exemple 11) ainsi sélectionné, par rotation de l'axe 2, de manière à réaliser le passage de l'un de deux rapports correspondants, tandis que la clé d'interverrouillage 16 immobilise les autres éléments (par exemple 10 et 12) par engagement de l'extrémité d'au moins un de ses bras 17 et 18 dans les encoches de ces autres éléments.

Selon l'invention, comme visible à la figuré 2, au doigt 5 est fixée, par exemple par soudage, une pièce tubulaire ou douille 22, de façon qu'elle soit parallèle à l'axe 2 ; cette douille contient coaxialement un ressort hélicoïdal 23 et, de part et d'autre de celui-ci, deux billes 24 qui saillent légèrement et respectivement des deux extrémités de la douille en étant poussées en sens inverses par le ressort 23, avec interposition de coussinets d'appui 25, chacune contre l'une de deux rampes 26,27 en vis-à-vis solidaires respectivement des deux bras 17 et 18 de la clé.

Ces rampes, de préférence en matériau de grande dureté et rapportées sur les bras 17 et 18 par un moyen de fixation quelconque non représenté, comportent chacune trois crans 28 dans lesquels peut s'engager alternativement la bille associée, provoquant l'immobilisation provisoire -ou le maintien- du doigt 5 entre les deux bras 17 et 18. Ces crans sont disposés de façon que les positions du doigt ainsi maintenu qu'ils déterminent correspondent respectivement au point mort pour le cran central et aux deux engagements de rapports assurés par l'élément mobiles 10,11 ou 12 sélectionné.

Ainsi, lors de chaque manoeuvre de passage ou de dégagement d'un rapport, le doigt 5 pivotant avec l'axe 2 entre les deux bras 17 et 18 immobiles de la clé 16, la douille 22 est déplacée entre les deux rampes 26,27, et les billes 24 roulent sur les rampes d'un cran à un autre en comprimant le ressort 23. Dès que les billes parviennent au cran correspondant au rapport ou au point mort choisi par l'utilisateur de la boîte de vitesses, elles s'y maintiennent grâce à la poussée du ressort 23, d'où résulte le maintien du doigt 5, donc de l'élément mobile sélectionné, dans la position choisie.

Les deux billes, étant poussées en sens inverses, exercent sur les bras 17 et 18 des efforts opposés qui, s'appliquant en interne sur la clé 16, ne sont pas transmis à l'axe 2 et n'induisent donc aucun frottement au droit de la portée de la clé 16 sur l'axe 2 et au droit des paliers 3 et 4. Il en résulte que les manoeuvres s'effectuent avec douceur et précision et que les usures sont minimales.

Diverses variantes peuvent être réalisées sans modifier les caractéristiques de l'invention : ainsi par exemple deux roulettes d'un type connu utilisées dans d'autres dispositifs de maintien d'éléments d'une commande de boîte de vitesses peuvent remplacer les billes 24 pour coopérer de la même façon avec deux rampes à crans adaptées, celles-ci étant essentiellement disposées en vis-à-vis sur les deux bras de la clé de verrouillage.

## Revendications

1. Commande interne de boîte de vitesses dans laquelle, pour déplacer alternativement plusieurs éléments mobiles (10, 11, 12) d'engagement de rapports, un axe de commande (2) porte d'une part un doigt (5) transversal fixé à l'axe (2) et propre à d'abord sélectionner, par coulissement de l'axe de commande, l'un desdits éléments (10, 11, 12), puis à entraîner par rotation de l'axe de commande ledit élément ainsi sélectionné; de manière à réaliser l'engagement ou le dégagement des rapports, et d'autre part une clé d'interverrouillage (16) solidaire axialement de l'axe (2) et immobile en rotation, tandis qu'un dispositif de maintien desdits éléments mobiles (10, 11, 12) est interposé entre le doigt (5) et la clé d'interverrouillage (16), cette clé (16) comporte deux bras radiaux (17, 18) entre lesquels le doigt (5) est mobile en rotation, ***caractérisée en ce que*** ledit dispositif de maintien (M) comporte deux billes (24) ou roulettes portées par le doigt (5) et poussées, parallèlement à l'axe, en sens inverses respectivement contre deux rampes en vis-à-vis (26, 27) portées chacune par l'un des deux bras (17, 18).

2. Commande selon la revendication 1, ***caractérisée en ce que*** les deux billes (24) ou roulettes sont poussées par un même ressort (23) interposé entre elles.

3. Commande selon la revendication 2, ***caractérisée en ce que*** les deux billes (24) et le ressort (23) sont logés dans une pièce tubulaire (22) solidaire du doigt (5).

4. Commande selon la revendication 3, ***caractérisée en ce qu***'un coussinet d'appui (25) est interposé entre le ressort (23) et chaque bille (24).

5. Commande selon l'une quelconque des revendications précédentes, ***caractérisée en ce que*** les rampes (26,27) sont formées chacune sur une pièce en matériau dur rapportée sur le bras associé (17, 18).

## Patentansprüche

1. Innere Steuerung für ein Schaltgetriebe zum wahlweisen Verschieben mehrerer beweglicher Elemente (10, 11, 12) zum Einlegen von Gängen, bei der eine Steuerachse (2) Folgendes trägt:
- zum einen einen quer verlaufenden, an der Achse (2) befestigten Finger (5), der zunächst durch Verschieben der Steuerachse eines der Elemente (10, 11, 12) auswählen und dann das ausgewählte Element durch Rotation der Steuerachse betätigen kann, sodass die Gänge eingelegt oder gelöst werden,
- und zum anderen einen Zwischenverriegelungsschlüssel (16), der axial fest mit der Achse (2) verbunden und drehfest ist, während eine Vorrichtung zum Halten der beweglichen Elemente (10, 11, 12) zwischen dem Finger (5) und dem Zwischenverriegelungsschlüssel (16) angeordnet ist, wobei der Schlüssel (16) zwei radiale Arme (17, 18) aufweist, zwischen denen der Finger (5) rotationsbeweglich ist, **dadurch gekennzeichnet, dass** die Haltevorrichtung (M) zwei Kugeln oder Rollen (24) aufweist, die vom Finger (5) getragen werden und parallel zur Achse in jeweils entgegengesetzten Richtungen gegen zwei gegenüberliegende Rampen (26, 27) gepresst werden, welche jeweils von einem der beiden Arme (17, 18) getragen werden.

2. Steuerung nach Anspruch 1, **dadurch gekennzeichnet, dass** die beiden Kugeln oder Rollen (24) von ein und derselben Feder (23) betätigt werden, die zwischen ihnen angeordnet ist.

3. Steuerung nach Anspruch 2, **dadurch gekennzeichnet, dass** die beiden Kugeln (24) und die Feder (23) in einem rohrförmigen Teil (22) untergebracht sind, das mit dem Finger (5) fest verbunden ist.

4. Steuerung nach Anspruch 3, **dadurch gekennzeichnet, dass** ein Aufstützlager (25) zwischen der Feder (23) und jeder Kugel (24) angeordnet ist.

5. Steuerung nach einem der vorhergehenden Ansprüche, **dadurch gekennzeichnet, dass** die Rampen (26, 27) jeweils an einem Teil aus hartem Material angeformt sind, das am zugehörigen Arm (17, 18) angefügt ist.

## Claims

1. Internal control for a gear box in which, in order to displace alternately several moveable members (10, 11, 12) for putting into gear, a control shaft (2) carries on the one hand a transverse finger (5) fixed to the shaft (2) and suitable for first selecting, by sliding of the control shaft, one of said members (10, 11, 12), then for driving, by rotation of the control shaft, said member thus selected, so as to carryout the engagement or disengagement of gears, and on the other hand an interlocking key (16) integral axially with the shaft (2) and immobile in rotation, whilst a device for holding said moveable members (10, 11, 12) is interposed between the finger (5) and the interlocking key (16), said key (16) has two radial arms (17, 18) between which the finger (5) is moveable in rotation, ***characterised in that*** said holding device (M) has two balls (24) or wheels carried by the finger (5) and pushed, parallel to the shaft, in inverse directions respectively against two ramps (26, 27) facing each other, each carried by one of the two arms (17, 18).

2. Control according to Claim 1, ***characterised in that*** the two balls (24) or wheels are pushed by the same spring (23), interposed between them.

3. Control according to Claim 2, ***characterised in that*** the two balls (24) and the spring (23) are housed in a tubular part (22) integral with the finger (5).

4. Control according to Claim 3, ***characterised in that*** a support bushing (25) is interposed between the spring (23) and each ball (24).

5. Control according to any one of the preceding claims, ***characterised in that*** the ramps (26, 27) are each formed on a part made of hard material added on the associated arm (17, 18).
